# EUROPEAN PATENT SPECIFICATION

(11) **EP 3 208 240 B1**
(45) Date of publication and mention of the grant of the patent: **16.08.2023**
(21) Application number: 17156120.2
(22) Date of filing: 14.02.2017
(51) Int. Cl.: C02F 1/00, C02F 1/28, C02F 1/52, C02F 103/12, C02F 11/12, C02F 1/66, B28C 5/42, B03B 9/06, C02F 9/00

(54) **DEVICE AND METHOD FOR TREATING CEMENT-CONTAINING WASTEWATER ON A VESSEL**
VORRICHTUNG UND VERFAHREN ZUR BEHANDLUNG VON ZEMENT-ENTHALTENDEM ABWASSER AUF EINEN SCHIFF
DISPOSITIF ET PROCÉDÉ DE TRAITEMENT D'EAUX USÉES CONTENANT DU CIMENT SUR UN NAVIRE

(30) Priority: 17.02.2016 BE 201605113
(43) Date of publication of application: 23.08.2017
(73) Proprietor: DEME Offshore BE N.V., 2070 Zwijndrecht (BE)
(72) Inventor: Duyck, Mathieu Antoine, 8550 Zwevegem (BE); Hendrickx, Jan Pieter Maria, 2018 Antwerpen (BE)
(74) Representative: Brouwer, Hendrik Rogier

(56) References cited:
- WO-A1-2005/102937
- WO-A1-2013/124639
- FR-A1- 2 702 761
- FR-A1- 2 969 930
- JP-A- 2005 329 335
- US-A1- 2005 145 548
- US-A1- 2007 284 312
- US-A1- 2015 034 535

## Description

### FIELD OF THE INVENTION

The present invention relates to a method and device for treating cement-containing wastewater on a vessel. The present invention relates more particularly to a mobile device and method for cleaning cement-containing wastewater on a vessel, in particular a vessel for placing a wind turbine at sea.

### BACKGROUND OF THE INVENTION

During construction of wind turbines at sea large quantities of grout (a cement/water mixture) are applied as binder between foundation piles arranged in the seabed and a transition piece or a suction bucket jacket on which the wind turbine is ultimately arranged. The transition piece is intended to span the distance between the seabed and the water surface. Following connection of the foundation piles and the transition piece with grout the tool applied in the grouting has to be cleaned. Such a tool comprises for instance the grout pumps and the conduits through which the grout mixture has been transported to the seabed.

Cleaning of the tool has to take place relatively quickly because grout cures relatively quickly. For this purpose the tool is flushed with large quantities of water. The resulting cement-containing wastewater is in some cases pumped overboard or is left on board and transported to shore following operations.

Transporting the wastewater to land is disadvantageous because space is scarce on a vessel. Pumping the cement-containing wastewater into the sea is also undesirable because this has an adverse effect on the natural environment.

There is therefore a need for a method and device for treating cement-containing wastewater on the vessel itself, since the above stated drawbacks are then at least partially obviated.

Japanese patent application JP 2005 329335 A relates to a method for producing car washing water, comprising steps of applying a filtration treatment, a reduction treatment and an adsorption treatment to sludge water.

U.S. patent application US 2015/034535 A1 relates to a portable disposable wastewater recycling technique and system. Waste water returning to the surface during the process of hydraulic fracking or mining is routed through a portable water filtration system to remove impurities on site and to eject clean portable environmental safe water.

### SUMMARY OF THE INVENTION

Provided according to the invention is a device according to claim 1. The invented device comprises a holder with an inlet for cement-containing wastewater; dosing means for dosing a treatment agent to the holder; combined filtration/drainage means connected to an outlet of the holder; adsorption means connected to an outlet of the combined filtration/drainage means; and means for discharging treated wastewater connected to an outlet of the adsorption means.

Many methods are available for the purpose of treating, and particularly cleaning, cement-containing wastewater. Suitable processes can for instance comprise physical, chemical and microbiological treatments. Physical treatment methods comprise of removing contaminants from the wastewater using for instance adsorbents. Chemical treatments are performed by adding chemicals to the wastewater in order for instance to render the contaminants harmless or to encapsulate them. Biological treatment methods comprise the use of natural organisms to decompose the contaminants.

Little space is available on a vessel for treating the cement-containing wastewater. It has been found that a device according to the invention can be given a compact form, whereby it is highly suitable for use on a vessel. The fact that a compact device can suffice is based on the insight that a good deal of time is available for the treatment of the cement-containing wastewater. The selected treatment steps (chemical dosing, combined filtration/drainage and adsorption) in the stated sequence moreover provide for an effective separation of contaminants from the wastewater. This makes the device particularly suitable for application on a vessel, particularly a vessel for placing a wind turbine at sea.

Using the invented device the cement-containing wastewater can be treated to a pH < 10, preferably to a pH < 9, and most preferably to a pH < 8.

A further advantage is that the process of cleaning the cement-containing wastewater can be performed on site, in particular on the vessel itself. The device has a mobile configuration and at least two of the holder, the dosing means, the combined filtration/drainage means, the adsorption means and the pump means are arranged in a beam-like frame. The beam-like frame is embodied as a shipping container, preferably a shipping container of standardized dimensions, such as for instance a 20-foot container, i.e., a container having outside dimensions of approx. 6.10 m long x 2.44 m wide x 2.59 m high. Transport of the device and placing thereof on deck are facilitated by the standard dimensions of such transport containers. A plurality of frames and/or containers can if desired be stacked in both horizontal and vertical direction.

In order to increase the accessibility of a device arranged in a shipping container, in an embodiment of the invention a wall of the frame or the container comprises the inlet for cement-containing wastewater and/or the outlet of the adsorption means.

The holder in which the cement-containing wastewater is in the first instance received can have any shape and volume. It is advantageous here to adapt the volume to the anticipated quantity of wastewater for a wind turbine installation works. An embodiment according to the invention comprises a holder with a volume lying between 2 and 50 m³, more preferably between 5 and 20 m³, and most preferably between 10 and 20 m³. The holder can be made from any material, for instance steel or aluminium. A plastic holder is also possible.

The holder is utilized mainly as buffer vessel. Flushing of the tool does after all preferably take place relatively quickly in order to prevent premature curing in the tool. The holder ensures that flushing of the tool and the final treatment (cleaning) of the cement-containing wastewater can take place separately over time. If desired, the device comprises upstream of the holder a filtering device which can remove the coarser particles from the cement-containing wastewater. Coarser particles have for instance a size of at least 0.5 mm, more preferably of at least 1 mm.

The dosing means for dosing a treatment agent to the holder comprise a dosing pump.

The treatment agent can hereby be fed to the holder at the desired flow rate and at the appropriate times.

It has been found that a device according to an embodiment wherein the treatment agent comprises a neutralizing acid, a flocculating agent and optionally a coagulating agent provides the best results in terms of degree of purity, treatment speed and other relevant process parameters.

Provided in a preferred embodiment is a device wherein the dosing means are configured to successively dose the neutralizing acid and the flocculating agent, followed optionally by the coagulating agent.

In order to keep the supplied treatment agents in solution and to hold the contaminants present in the wastewater in suspension and/or distribute them properly through the wastewater present in the holder, the holder is provided with stirring means.

The device according to the invention further comprises combined filtration/drainage means. These means are configured to filter and also at least partially drain in efficient manner cement-containing wastewater coming from the holder. These means provide for a significant increase in speed of the cleaning process wherein the combined filtration/drainage means comprise a holder in which a geotextile holder body is received.

Geotextiles are known per se and are for instance applied as covering means in road construction and hydraulic engineering. Suitable geotextile holders are for instance made from polyolefins such as polyethylene and polypropylene. Other materials are also suitable.

The geotextile holder body may be arranged in one or more nested holders. The holder can here comprise for instance a cylindrical or polygonal tank in which the holder body is arranged. A particularly suitable holder body comprises a bag which is arranged in the holder, for instance by the bag being suspended in the holder. In this embodiment the neutralized, coagulated and/or flocculated wastewater coming from the chemical treatment holder is carried into the geotextile holder body, wherein the wastewater is separated into a relatively solid component, which remains behind in the holder body, and a relatively liquid component which can escape through the geotextile of the holder body. The relatively solid component comprises a high content of cement-containing (coagulated and/or flocculated) particles. The relatively liquid component comprises wastewater from which cement-containing particles have been largely removed.

In an embodiment of the device the geotextile holder body is configured to take up at least 75% by weight of the cement present in the wastewater, preferably at least 80% by weight, most preferably at least 95% by weight.

The wastewater (the liquid component) coming from the combined filtration/drainage means is carried for further purification to adsorption means of the invented device. The adsorption means comprise a holder in which a quantity of active carbon is received.

The cement-containing wastewater and the treatment agents can be distributed from respective storage means present on the vessel, preferably via pipe conduits present between the components of the device. The liquid component (the cleaned wastewater) can be discharged via the outlet of the adsorption means to the surrounding seawater, or also be stored. The solid component (the coagulated/flocculated cement-containing particles) are collected in the holder body of the combined filtration/drainage means and transported to shore or to another storage location. An advantage thereof is that the solid component comprising the contamination can be discharged easily via the holder body.

In a preferred embodiment the device can also comprise, in addition to the above described components, walkways along one or more outer sides of one or more frames of the device. Operating platforms can also be provided. The walkways and operating platforms guarantee easy access to the whole device.

The present invention also relates to a method for treating cement-containing wastewater on a vessel according to claim 7. The method comprises, among others, the steps of introducing cement-containing wastewater via a holder inlet into the holder; dosing a treatment agent to the holder with dosing means and allowing the treatment agent to take effect; filtering and draining the treated wastewater by means of combined filtration/drainage means connected to an outlet of the holder; carrying the wastewater via an outlet of the combined filtration/drainage means to adsorption means; carrying the wastewater through the adsorption means; and discharging treated wastewater via an outlet of the adsorption means, preferably to the surrounding sea.

### DESCRIPTION OF THE FIGURES

Figure 1 shows schematically a wind turbine placed at sea;
Figure 2 is a rear view of a jack-up platform which can be applied for placing a wind turbine at sea;
Figure 3 is a side view of the jack-up platform shown in figure 2 which is provided with a device according to an embodiment of the present invention;
Figure 4 shows a flow diagram of a method according to an embodiment of the present invention;
Figure 5 shows schematically a first embodiment of a device according to the present invention; and
Figure 6 finally shows an alternative device not forming part of claim 1.

### DETAILED DESCRIPTION

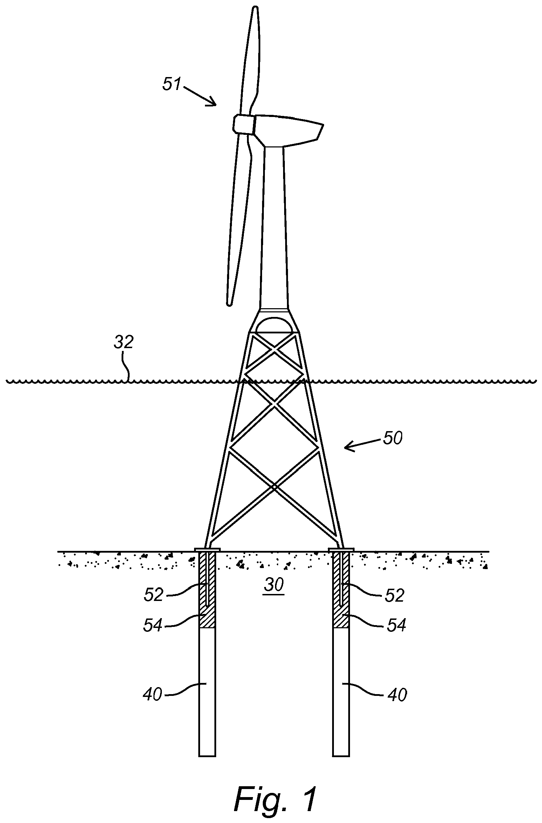

Referring to figure 1, a wind turbine 51 placed at sea is shown. Wind turbine 51 is placed on a so-called transition piece which in the shown variant comprises a jacket 50. Jacket 50 is intended to bridge the distance between the seabed 30 and the water surface 32. Jacket 50 can comprise three, four or more legs 52 and supports on a foundation arranged in seabed 30 in the form of three, four or more hollow foundation piles 40 driven into seabed 30. The connection 54 between jacket 50 and foundation piles 40 can for instance take place by arranging legs 52 of jacket 50 in or around piles 40 and anchoring legs 52 to piles 40 by means of grouting. The amount of grout mixture (a cement/water mixture) required for this purpose is carried under the water surface 32 by means of tools (not shown) such as pumps and pipe conduits and injected into the intermediate space between legs 52 and foundation piles 40. Once it has cured the grout mixture forms a connection 54 between jacket 50 and foundation 40. Wind turbine 51 can then be placed on jacket 50.

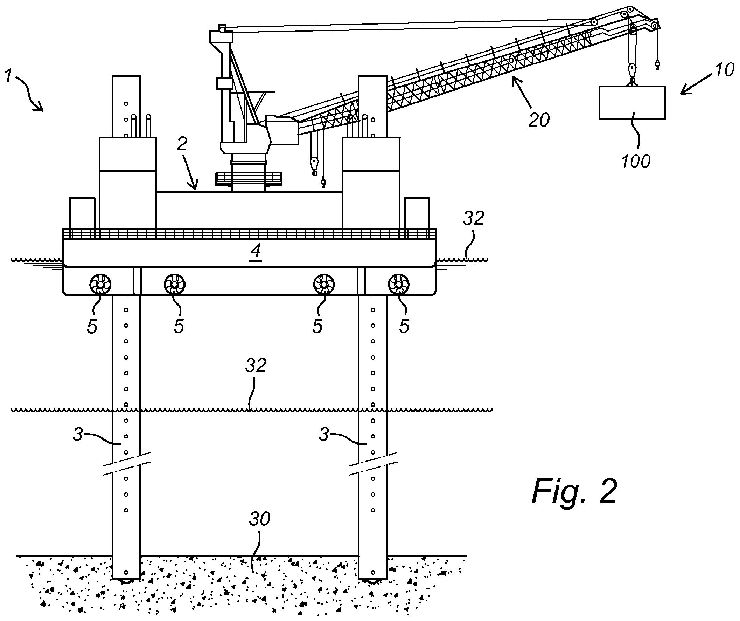

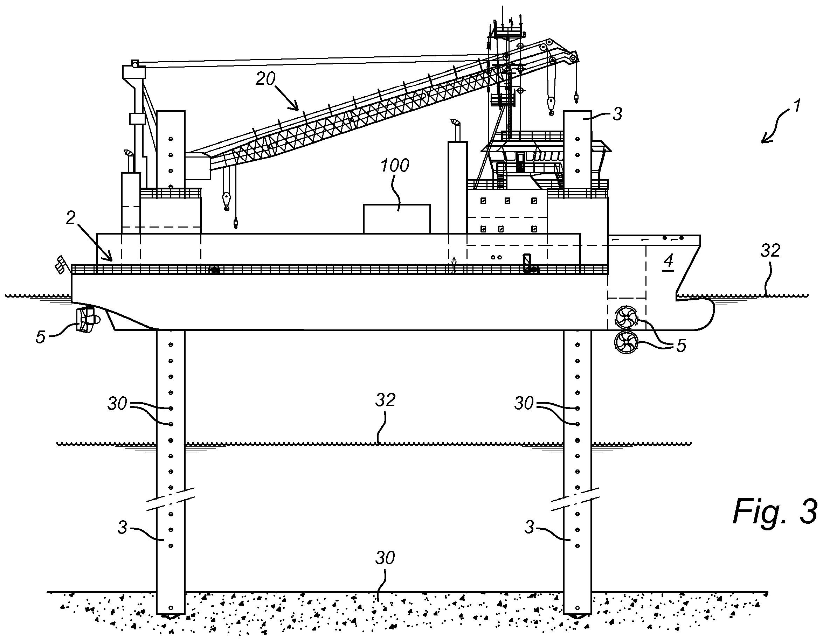

A vessel with which a wind turbine 51 can be transported to a suitable location at sea and can be placed at sea is shown in figures 2 and 3. Such a vessel can for instance comprise a jack-up offshore platform 1 which comprises a hull 4 and a work deck 2, and is further provided with spud poles 3 which are driven into the seabed and can hold the work deck in stable manner above the water surface. Each spud pole 3 extends vertically and is movable in this direction between a raised position (not shown), in which the jack-up platform can be navigated, and a lowered position (shown in the figures), in which spud poles 3 are supported on or in the seabed 30. In such a position work deck 2 can be brought above the water surface 32. Hull 4 is generally provided with propellers 5 for propelling the platform 1 with spud poles 3 in raised position.

In order to be able to pick up a wind turbine 51 or a device 10 according to the invention the jack-up offshore platform 1 is provided with a lifting device in the form of a crane 20. As stated above, jacket 50 is picked up with crane 20 and placed on foundation piles 40, after which the connection 54 is brought about by means of grouting.

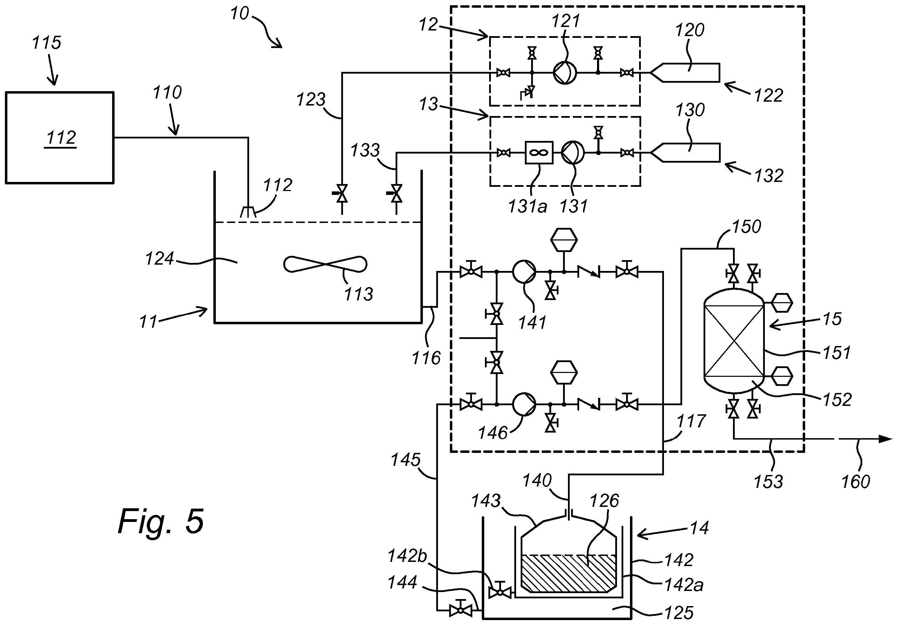

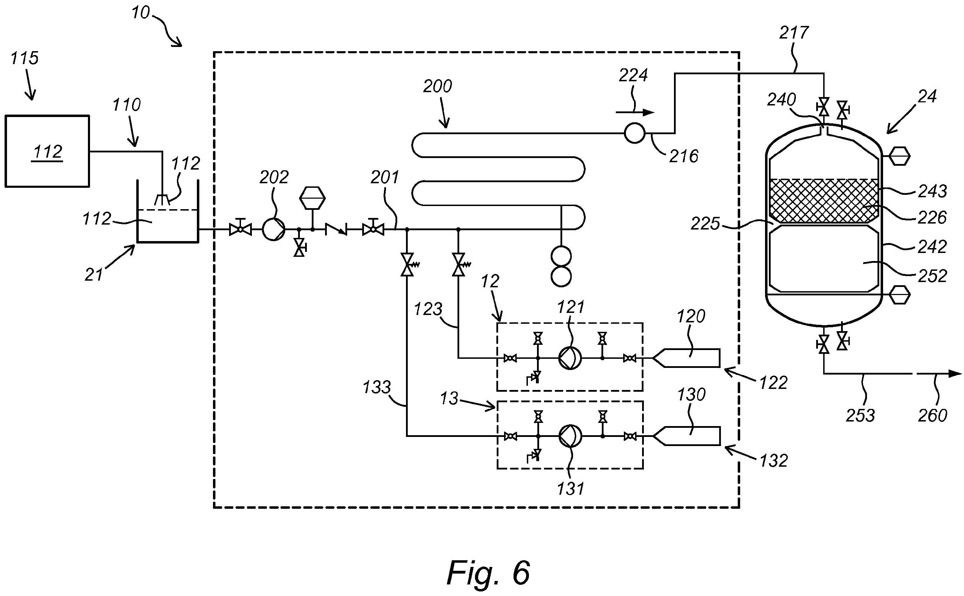

After connection of foundation piles 40 and jacket 50 with the grout mixture the tool applied during the grouting has to be cleaned. Provided for this purpose is a device 10 according to the invention, two possible exemplary embodiments of which are shown in figures 5 and 6.

Referring to figure 5, an embodiment of the invented device 10 comprises a holder in the form of buffer vessel 11. Buffer vessel 11 is filled via an inlet 110 with cement-containing wastewater 112 resulting from the grouting. This can take place directly or optionally via another storage tank 115. The cement-containing wastewater 112 is obtained by flushing the tool (not shown). Device 10 further comprises first dosing means 12 for dosing a first treatment agent comprising a neutralizing acid 120 to buffer vessel 11. First dosing means 12 comprise a dosing dump 121 which carries the acid 120 from a storage tank 122 via a conduit 123 to buffer vessel 11. In addition, device 10 comprises second dosing means 13 for dosing a second treatment agent comprising a flocculating agent 130 to buffer vessel 11. Second dosing means 13 comprise a dosing pump 131 which carries the flocculating agent 130 from a storage tank 132 via a conduit 133 to buffer vessel 11, and a stirrer 131a which can mix in a diluting agent optionally fed to the flocculating agent 130. The conduits are provided with valves at appropriate positions. The mixture 124 of cement-containing wastewater 112 and the two treatment agents (120, 130) is stirred continuously with one or more stirrers 113 present in buffer vessel 11. Buffer vessel 11 can have any shape and volume, and in the shown embodiment has a volume of about 10 to 20 m³ and is embodied in steel.

Device 10 further comprises combined filtration/drainage means 14 connected to an outlet 116 of buffer vessel 11. The combined filtration/drainage means 14 are connected by means of a conduit 117 to outlet 116 of buffer vessel 11 and connect to an inlet of 140 of means 14. Accommodated in conduit 117 are one or more pumps 141 which can carry the mixture 124 coming from buffer vessel 11 from buffer vessel 11 to means 14. In the shown embodiment the combined filtration/drainage means 14 comprise an enveloping holder 142 in which a flexible holder body 143 is received. Holder body 143 comprises a bag of a geotextile material, for instance a polypropylene geotextile, in which the neutralized, coagulated and/or flocculated mixture 124 coming from conduit 117 is collected. The suspension of flexible holder body 143 is such that inlet 140 is situated above the quantity of mixture 124 collected in holder body 143. It may be desired to hold the flexible holder body 143 substantially wholly underwater, for instance by filling holder 142 substantially completely with water. It is also possible to accommodate flexible holder body 143 in a second holder 142a which is arranged in holder 142. In this embodiment second holder 142a is kept substantially fully filled with water, and in any case to a level at which flexible holder body 143 lies substantially wholly underwater. Through the action of gravitational force the mixture water 125 present in mixture 124 will penetrate through the pores of the geotextile material and accumulate at the bottom of holder 142, either directly if a second holder 142a has not been placed, or through overflow from holder 142a, or via an opened shut-off valve 142b at the bottom of holder 142 as shown in figure 5. The coarser grained cement-containing material 126 present in mixture 124 will substantially remain in holder body 143. The combination of holder body 143 and holders (142, 142a) thus provides for a combined filtration and drainage of the mixture 124 of cement-containing wastewater 112. The geotextile holder body 143 is for instance configured to take up at least 75% by weight of the cement present in the wastewater.

Device 10 is finally also provided with adsorption means 15 connected to an outlet 144 of the combined filtration/drainage means 14. An outlet 144 of holder 142 of the combined filtration/drainage means 14 is connected by means of a conduit 145 to an inlet 150 of adsorption means 15. Accommodated in conduit 145 are one or more pumps 146 which can carry the filtered wastewater 125 coming from holder 142 from holder 142 to adsorption means 15. In the shown preferred embodiment adsorption means 15 comprise a holder tank 151 in which a quantity of active carbon 152 is received. Inlet 150 is situated above the quantity of active carbon 152 present in holder tank 151. Through the action of gravitational force and the pressure generated by pump 146 the filtered wastewater 125 fed to holder tank 151 will penetrate through the pores of the mass of active carbon 152 and the contaminants, in particular superplasticizers, still present in wastewater 125 will adsorb at least partially to the active carbon surfaces and remain at least partially in the mass of active carbon 152. The thus purified wastewater 160 can then be discharged via a conduit 153, for instance to the surrounding seawater.

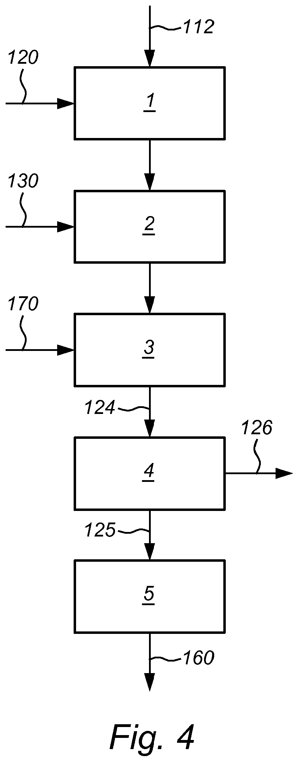

A method which can be performed with device 10 is shown schematically in figure 4. In step 1 the cement-containing wastewater 112 collected in storage tank 115 is first neutralized in buffer vessel 11 by the supplied acid 120. Suitable acids comprise for instance hydrochloric acid (HCl) and/or sulphuric acid (H₂SO₄), although other acids are likewise possible. It is thus possible for instance to apply CO₂ as acid.

In step 2 a flocculating agent 130 is fed to buffer vessel 11 in order to destabilize the solid particles suspended in the wastewater 112 and cause them to coagulate to form flakes of larger size. The particles suspended in the wastewater are relatively stable and do not particularly attract each other. They therefore settle slowly. The stability is caused in that the colloidal particles present in the wastewater can be electrically charged. The particles are hereby often surrounded by a layer of opposite charge, for instance ions. This double layer prevents coagulation and/or flocculation. The flocculating agent added in step 2 ensures that the colloidal particles can flocculate and settle within a set period of time. Suitable coagulating and flocculating agents 170 comprise, but are not limited to, iron chlorides (FeCl₃), poly-aluminium chlorides (PAC), polyelectrolytes or combinations of these agents. The fluctuating agents generally comprise polymers, the backbone of which is provided with charged side groups. These are able to form micro-flocks of colloidal particles into larger particles (conglomerates). The neutralization/(optional) coagulation/flocculation takes place while stirring with stirring means 113. In step 3 a coagulating agent can be supplied, if desired simultaneously with step 2, in order to accelerate and/or improve in other manner the coagulation and/or flocculation process. Any coagulating agent can in principle be applied in the method and device according to the invention. Suitable coagulating agents comprise electrostatic coagulating agents, which suppress the double layer, adsorption coagulating agents, which adsorb and in this way bind the particles, and precipitation coagulating agents which capture colloidal particles through for instance slurry formation. Some suitable coagulating agents act in accordance with more than one mechanism.

In step 4 the mixture 124 coming from the buffer vessel is then filtered and drained in the combined filtration/drainage means 14. The cement-containing material 126 left behind in holder body 143 is transported away to shore or other storage location.

The filtered wastewater 125 coming from holder 142 is then guided in a step 5 through adsorption means 15. The superplasticizers still present in the filtered wastewater 125 are here adsorbed to the internal surfaces of the mass of active carbon 152. The cleaned wastewater 160 is subsequently drained to a suitable storage, for instance the surrounding water.

Superplasticizers (softeners) are applied in cement products in order to maintain processability at lower water contents. They are therefore present in the cement-containing wastewater and have to be removed. This takes place according to the invention by adsorption. Suitable superplasticizers comprise sulfonated melamine formaldehyde condensates (SMF), sulfonated naphthalene formaldehyde condensates (SNF), modified lignosulfonates (MLS) and polycarboxylate derivatives (PC). It is found that all these types can be properly removed and reduced to permitted levels using the invented device.

The adsorption of the superplasticizers to the active carbon surfaces can take place by chemisorption and/or by physisorption, wherein the latter is preferably applied. Any mass of active carbon is in principle suitable and can be selected on the basis of for instance the level of molecules to be adsorbed in the wastewater. The equilibrium charge of the mass of active carbon (the quantity by weight of adsorbed molecules per quantity by weight of active carbon in mg/g) at a given temperature can be described by means of an adsorption isotherm.

The properties of the applicable active carbon can be selected within broad limits. It is thus possible to select the area per unit of weight above 250 m²/g, more preferably above 500 m²/g, and most preferably above 750 m²/g. The active carbon can be obtained by carbonizing organic material and can be applied in powder form (Powdered Activated Carbon (PAC)) and/or in the form of granules (Granulated Activated Carbon (GAC)). GAC is preferably applied.

The temperature during the adsorption process can likewise be selected within broad limits.

Although not essential, it is advantageous for the adsorption of superplasticizers from the wastewater to be performed at pressures above atmospheric. Suitable pressures lie between 1-10 bar, more preferably between 1-6 bar. Suitable residence times lie between 5-30 minutes, more preferably between 10-25 minutes and most preferably between 12-20 minutes.

Referring to figure 6, an alternative device 10, not forming part of claim 1, comprises a holder in the form of a relatively small buffer vessel 21. Buffer vessel 21 is filled via an inlet 110 with cement-containing wastewater 112 which results from the grouting and which has been collected for instance in a storage tank 115. Using pump 202 the wastewater 112 is fed substantially immediately via conduit 201 to a pipe flocculator 200. This comprises a plastic pipe, for instance of HDPE, in which a plurality of 180° bends are incorporated which create a turbulent flow for the purpose of good mixing of the substances present in pipe flocculator 200. Device 10 further comprises first dosing means 12 for dosing a first treatment agent comprising a neutralizing acid 120 to pipe flocculator 200. First dosing means 12 comprise a dosing pump 121 which carries the acid 120 from a storage tank 122 via a conduit 123 to pipe flocculator 200. In addition, device 10 comprises second dosing means 13 for dosing a second treatment agent comprising a flocculating agent 130 to pipe flocculator 200. Second dosing means 13 comprise a dosing pump 131 which carries the flocculating agent 130 from a storage tank 132 via a conduit 133 to pipe flocculator 200. The conduits are provided with valves at appropriate positions. The mixture of cement-containing wastewater 112 and the two treatment agents (120, 130) is mixed in turbulent manner in pipe flocculator 200 and neutralized/coagulated/flocculated to form a mixture 224.

Device 10 further comprises combined filtration/drainage means 14 connected to an outlet 216 of pipe flocculator 200. The combined filtration/drainage/adsorption means 24 are connected by means of a conduit 217 to outlet 216 of pipe flocculator 200 and connect to an inlet 240 of means 24. Pumps which can carry the mixture coming from pipe flocculator 200 to the means 24 can be accommodated in conduit 217. In the shown embodiment the combined filtration/drainage/adsorption means 24 comprise an enveloping holder 242 in which a flexible holder body 243 is received. Holder body 243 comprises a bag of a geotextile material, for instance a polypropylene geotextile, in which the neutralized, flocculated and/or coagulated mixture 224 coming from conduit 217 is collected. The suspension of flexible holder body 243 is such that inlet 240 is situated above the quantity of mixture 226 collected in holder body 243. Through the action of gravitational force the mixture water 225 present in mixture 224 will penetrate through the pores of the geotextile material and accumulate in the space between the geotextile body 243 and an adsorption means 25 likewise situated in holder 242. The coarser grained cement-containing material 226 present in mixture 224 will substantially remain behind in holder body 243.

Adsorption means 25 comprise a quantity of active carbon 252 received in holder 242 downstream of the geotextile holder body 243. Through the action of gravitational force the filtered wastewater 225 will penetrate through the pores of the mass of active carbon 252 and the contaminants still present in wastewater 225, in particular superplasticizers, will adsorb at least partially to the active carbon surfaces and remain at least partially in the mass of active carbon 252. The combination of holder body 243 and adsorption means 252 thus provides for a combined filtration, drainage and adsorption of the neutralized/flocculated/coagulated mixture 224 of cement-containing wastewater 112.

The thus purified wastewater 260 can then be drained via a conduit 253, for instance to the surrounding seawater.

An advantage of device 10 according to the invention is that the process of cleaning the cement-containing wastewater can be performed on site, in particular on vessel 1 itself. At least two of the holder, the dosing means, the combined filtration/drainage means, the adsorption means and the pump means are advantageously arranged in a shipping container 100 of standardized dimensions, such as for instance a 20-foot container, i.e., a container having outside dimensions of approx. 6.10 m long x 2.44 m wide x 2.59 m high. Such a transport container can be easily transported to an offshore jack-up platform 1 and placed on deck, for instance by picking up container 100 with device 10 as according to figure 2 from another vessel (not shown) with crane 20 and placing it on work deck 2 (see figure 3).

## Claims

1. Device (10) for treating cement-containing wastewater on a vessel, the device having a mobile configuration and comprising a frame of beams forming a shipping container (100), the device further comprising
- a holder (11) for receiving cement-containing wastewater (112) in the first instance therein, the holder having a holder inlet (110) via which the cement-containing wastewater (112) can be introduced into the holder (11), wherein the holder (11) is configured to buffer the cement-containing wastewater (112);
- dosing means (12, 13) comprising a conduit (123, 133) and a dosing pump (121, 131) for dosing a treatment agent (120, 130) to the holder (11) so as to add the treatment agent (120, 130) to the cement-containing wastewater (112) to be received in the holder (11);
- combined filtration and drainage means (14) comprising an inlet (140) which is connected to an outlet (116) of the holder (11) for receiving the cement-containing wastewater in the first instance therein, wherein the combined filtration and drainage means (14) comprise a holder (142) in which a holder body (143) made of geotextile is received, wherein the holder body (143) is arranged between the inlet (140) of the combined filtration and drainage means (14) and an outlet (144) of the holder (142) of the combined filtration and drainage means (14), such that the cement-containing wastewater coming from the inlet (140) of the combined filtration and drainage means (14) is collected in the holder body (143) and carried through pores of the geotextile material of the holder body (143) towards the outlet (144) of the holder (142) of the combined filtration and drainage means (14) so as to filter the cement-containing wastewater, wherein the holder (142) of the combined filtration and drainage means (14) is different from the holder (11) for receiving cement-containing wastewater (112) in the first instance therein;
- adsorption means (15) comprising an inlet (150) which is connected to the outlet (144) of the holder (142) of the combined filtration and drainage means (14); and
- means (153) for discharging treated wastewater connected to an outlet of the adsorption means (15),
wherein at least two of the holder (11) for receiving the cement-containing wastewater in the first instance therein, the dosing means (12, 13), the combined filtration and drainage means (14) and the adsorption means (15) are arranged in the frame of beams,
wherein the holder (11) for receiving the cement-containing wastewater in the first instance therein is provided with stirring means (113) configured to stir the cement-containing wastewater (112) and the treatment agent (120, 130) to obtain a mixture (124) of the cement-containing wastewater and the treatment agent and to keep the treatment agent in solution and to hold contaminants present in the wastewater in suspension and/or distribute them properly through the wastewater present in the holder (11) for receiving the cement-containing wastewater in the first instance therein,
wherein the adsorption means (15) comprise a holder (151) in which a quantity of active carbon (152) is received, wherein the quantity of active carbon (152) is arranged between the inlet (150) and the outlet of the adsorption means (15), such that the cement-containing wastewater coming from the inlet (150) of the adsorption means (15) is carried through pores of the quantity of active carbon (152) towards the outlet of the adsorption means (15) so as to adsorb contaminants present in the wastewater, wherein the holder (151) of the adsorption means (15) is different from both the holder (142) of the combined filtration and drainage means (14) and the holder (11) for receiving cement-containing wastewater (112) in the first instance therein.

2. Device (10) as claimed in claim 1, wherein a wall of the container (100) comprises the inlet (110) for cement-containing wastewater (112) and/or the outlet of the adsorption means (15).

3. Device (10) as claimed in any of the foregoing claims, wherein the holder (11) for receiving the cement-containing wastewater in the first instance therein has a volume lying between 2 and 50 m³.

4. Device (10) as claimed in any of the foregoing claims, wherein the dosing means (12, 13) are configured to successively dose a neutralizing acid (120) and a flocculating agent (130), followed optionally by a coagulating agent.

5. Device (10) as claimed in any one of the foregoing claims, wherein the geotextile body (143) is configured to take up at least 75% by weight of the cement present in the wastewater by having pores with the appropriate size.

6. Vessel for placing a wind turbine (51) at sea, wherein the vessel is provided with a device (10) as claimed in any of the foregoing claims.

7. Method for treating cement-containing wastewater on a vessel using a device in accordance with claim 1, comprising the steps of
- providing a device (10) according to claim 1 on the vessel;
- introducing cement-containing wastewater (112) via the holder inlet (110) into the holder (11) for receiving the cement-containing wastewater in the first instance therein;
- dosing a treatment agent (120, 130) to the holder (11) for receiving the cement-containing wastewater in the first instance therein with the dosing means (12, 13) so as to add the the treatment agent (120, 130) to the cement-containing wastewater in the holder (11);
- stirring the cement-containing wastewater (112) and the treatment agent (120, 130) using the stirring means to obtain a mixture (124) of the cement-containing wastewater and the treatment agent and to keep the treatment agent in solution and to hold contaminants present in the wastewater in suspension and/or distribute them properly through the wastewater present in the holder (11) for receiving the cement-containing wastewater in the first instance therein;
- filtering and draining the treated wastewater using the combined filtration and drainage means (14) connected to the outlet (116) of the holder (11) for receiving the cement-containing wastewater in the first instance therein, comprising carrying the wastewater through the holder body (143) made of geotextile received in the holder of the filtration and drainage means;
- carrying the wastewater via the outlet (144) of the combined filtration and drainage means (14) to the adsorption means (15);
- carrying the wastewater through the active carbon (152) in the holder of the adsorption means (15); and
- discharging the treated wastewater via the outlet of the adsorption means (15) using the means (153) for discharging the treated wastewater.

## Patentansprüche

1. Vorrichtung (10) zur Behandlung von Zement enthaltendem Abwasser auf einem Schiff, wobei die Vorrichtung eine mobile Ausgestaltung hat und einen Rahmen aus Trägern aufweist, die einen Frachtcontainer (100) bilden, wobei die Vorrichtung weiterhin folgendes aufweist:
- einen Behälter (11) zum Aufnehmen von Zement enthaltendem Abwasser (112) im ersten Schritt, wobei der Behälter eine Behältereinlassöffnung (110) aufweist, über die das Zement enthaltende Abwasser (112) in den Behälter (11) eingebracht werden kann, wobei der Behälter (11) so ausgeführt ist, dass er das Zement enthaltende Abwasser (112) zwischenspeichert;
- Dosiereinrichtungen (12, 13) mit einer Leitung (123, 133) und einer Dosierpumpe (121, 131) zur Dosierung eines Behandlungsmittels (120, 130) für den Behälter (11), um das Behandlungsmittel (120, 130) dem in dem Behälter (11) aufzunehmenden Zement enthaltenden Abwasser (112) zuzusetzen;
- kombinierte Filtrier- und Ableitungseinrichtung (14) mit einer Einlassöffnung (140), die mit einer Auslassöffnung (116) des Behälters (11) zum Aufnehmen des Zement enthaltenden Abwassers im ersten Schritt verbunden ist, wobei die kombinierte Filtrier- und Ableitungseinrichtung (14) einen Behälter (142) aufweist, in dem ein aus Geotextil bestehender Behälterkörper (143) aufgenommen ist, wobei der Behälterkörper (143) derart zwischen der Einlassöffnung (140) der kombinierten Filtrier- und Abzugseinrichtung (14) und einer Auslassöffnung (144) des Behälters (142) der kombinierten Filtrier- und Abzugseinrichtung (14) angeordnet ist, dass das aus der Einlassöffnung (140) der kombinierten Filtrier- und Abzugseinrichtung (14) kommende Zement enthaltende Abwasser in dem Behälterkörper (143) aufgefangen wird und durch Poren des geotextilen Materials des Behälterkörpers (143) zur Auslassöffnung (144) des Behälters (142) der kombinierten Filtrier- und Abzugseinrichtung (14) gefördert wird, um das Zement enthaltende Abwasser zu filtern, wobei der Behälter (142) der kombinierten Filtrier- und Ableitungseinrichtung (14) verschieden von dem Behälter (11) zum Aufnehmen von Zement enthaltendem Abwasser (112) im ersten Schritt ist;
- Adsorptionseinrichtung (15) mit einer Einlassöffnung (150), die mit der Auslassöffnung (144) des Behälters (142) der kombinierten Filtrier- und Ableitungseinrichtung (14) verbunden ist;
sowie
- eine Einrichtung (153) zum Abführen von behandeltem Abwasser, die mit einer Auslassöffnung der Adsorptionseinrichtung (15) verbunden ist;
wobei mindestens zwei der folgenden Elemente in dem Rahmen aus Balken angeordnet sind: der Behälter (11) zum Aufnehmen des Zement enthaltenden Abwassers im ersten Schritt, die Dosiereinrichtungen (12, 13), die kombinierte Filtrier- und Ableitungseinrichtung (14) und die Adsorptionseinrichtung (15),
wobei der Behälter (11) zum Aufnehmen des Zement enthaltenden Abwassers im ersten Schritt mit einer Rühreinrichtung (113) zum Rühren des Zement enthaltenden Abwassers (112) und des Behandlungsmittels (120, 130) versehen ist, um ein Gemisch (124) aus dem Zement enthaltenden Abwasser und dem Behandlungsmittel zu erhalten und um das Behandlungsmittel in Lösung zu halten sowie in dem Abwasser vorliegende Schadstoffe in der Suspension zu halten und/oder sie gut in dem Abwasser zu verteilen, das in dem Behälter (11) zum Aufnehmen des Zement enthaltenden Abwassers im ersten Schritt vorliegt,
wobei die Adsorptionseinrichtung (15) einen Behälter (151) aufweist, in dem eine Menge an Aktivkohle (152) aufgenommen ist, wobei die Menge an Aktivkohle (152) zwischen der Einlassöffnung (150) und der Auslassöffnung der Adsorptionseinrichtung (15) derart angeordnet ist, dass das aus der Einlassöffnung (150) der Adsorptionseinrichtung (15) kommende Zement enthaltende Abwasser durch Poren der Menge an Aktivkohle (152) zu der Auslassöffnung der Adsorptionseinrichtung (15) befördert wird, um in dem Abwasser vorliegende Schadstoffe zu adsorbieren,
wobei der Behälter (151) der Adsorptionseinrichtung (15) sowohl von dem Behälter (142) der kombinierten Filtrier- und Ableitungseinrichtung (14) als auch von dem Behälter (11) zum Aufnehmen von Zement enthaltendem Abwasser (112) im ersten Schritt verschieden ist.

2. Vorrichtung (10) nach Anspruch 1, wobei eine Wand des Containers (100) die Einlassöffnung (110) für Zement enthaltendes Abwasser (112) und/oder die Auslassöffnung der Adsorptionseinrichtung (15) aufweist.

3. Vorrichtung (10) nach einem der vorhergehenden Ansprüche, wobei der Behälter (11) zum Aufnehmen des Zement enthaltenden Abwassers im ersten Schritt ein Volumen zwischen 2 und 50 m³ aufweist.

4. Vorrichtung (10) nach einem der vorhergehenden Ansprüche, wobei die Dosiereinrichtungen (12, 13) so ausgeführt sind, dass sie nacheinander eine neutralisierende Säure (120) und ein Flockungsmittel (130) dosieren, wahlweise gefolgt von einem Gerinnungsmittel.

5. Vorrichtung (10) nach einem der vorhergehenden Ansprüche, wobei der geotextile Körper (143) so ausgeführt ist, dass er mindestens 75 Gew-% des in dem Abwasser vorliegenden Zements aufnimmt, indem er Poren mit der geeigneten Größe aufweist.

6. Schiff zur Aufstellung einer Windkraftanlage (51) auf See, wobei das Schiff mit einer Vorrichtung (10) nach einem der vorhergehenden Ansprüche versehen ist.

7. Verfahren zur Behandlung von Zement enthaltendem Abwasser auf einem Schiff mithilfe einer Vorrichtung gemäß Anspruch 1, das die folgenden Schritte aufweist:
- Bereitstellen einer Vorrichtung (10) nach Anspruch 1 auf dem Schiff;
- Einbringen von Zement enthaltendem Abwasser (112) über die Behältereinlassöffnung (110) in den Behälter (11) zum Aufnehmen des Zement enthaltenden Abwassers im ersten Schritt;
- Dosieren eines Behandlungsmittels (120, 130) in den Behälter (11) zum Aufnehmen des Zement enthaltenden Abwassers im ersten Schritt mit den Dosiereinrichtungen (12, 13), um dem Zement enthaltenden Abwasser in dem Behälter (11) das Behandlungsmittel (120, 130) zuzusetzen;
- Rühren des Zement enthaltenden Abwassers (112) und des Behandlungsmittels (120, 130) mithilfe der Rühreinrichtung, um ein Gemisch (124) aus dem Zement enthaltenden Abwasser und dem Behandlungsmittel zu erhalten und das Behandlungsmittel in Lösung zu halten sowie in dem Abwasser vorliegende Schadstoffe in Suspension zu halten und/oder diese gut in dem Abwasser zu verteilen, das in dem Behälter (11) zum Aufnehmen des Zement enthaltenden Abwassers im ersten Schritt vorliegt;
- Filtern und Ableiten des behandelten Abwassers mithilfe der kombinierten Filtrier- und Ableitungseinrichtung (14), die mit der Auslassöffnung (116) des Behälters (11) zum Aufnehmen des Zement enthaltenden Abwassers im ersten Schritt verbunden ist, mit dem Befördern des Abwassers durch den aus Geotextil bestehenden Behälterkörper (143), der in dem Behälter der Filtrier- und Ableitungseinrichtung aufgenommen ist;
- Befördern des Abwassers über die Auslassöffnung (144) der kombinierten Filtrier- und Ableitungseinrichtung (14) zu der Adsorptionseinrichtung (15);
- Befördern des Abwassers durch die Aktivkohle (152) in dem Behälter der Adsorptionseinrichtung (15); sowie
- Abführen des behandelten Abwassers über die Auslassöffnung der Adsorptionseinrichtung (15) mithilfe der Einrichtung (153) zum Abführen des behandelten Abwassers.

## Revendications

1. Dispositif (10) de traitement des eaux usées contenant du ciment sur un bateau, le dispositif ayant une configuration mobile et comprenant un châssis de poutres formant un conteneur d'expédition (100), le dispositif comprenant en outre
- une cuve (11) pour recevoir les eaux usées contenant du ciment (112) dans le premier exemple dans le présent document, la cuve ayant une entrée de cuve (110) par l'intermédiaire de laquelle les eaux usées contenant du ciment (112) peuvent être introduites dans la cuve (11), dans lequel la cuve (11) est configurée pour tamponner les eaux usées contenant du ciment(112) ;
- un moyen de dosage (12, 13) comprenant une conduite (123, 133) et une pompe doseuse (121, 131) pour doser un agent de traitement (120, 130) dans la cuve (11) de manière à ajouter l'agent de traitement (120, 130) aux eaux usées contenant du ciment (112) destinées à être reçues dans la cuve (11) ;
- un moyen combiné de filtration et de drainage (14) comprenant une entrée (140) qui est raccordée à une sortie (116) de la cuve (11) pour recevoir les eaux usées contenant du ciment dans le premier exemple dans le présent document, dans lequel le moyen combiné de filtration et de drainage (14) comprend une cuve (142) dans laquelle un corps de cuve (143) composé de géotextile est reçu, dans lequel le corps de cuve (143) est agencé entre l'entrée (140) du moyen combiné de filtration et de drainage (14) et une sortie (144) de la cuve (142) du moyen combiné de filtration et de drainage (14), de telle sorte que les eaux usées contenant du ciment provenant de l'entrée (140) du moyen combiné de filtration et de drainage (14) sont collectées dans le corps de cuve (143) et acheminées à travers les pores du matériau géotextile du corps de cuve (143) en direction de la sortie (144) de la cuve (142) du moyen combiné de filtration et drainage (14) pour filtrer les eaux usées contenant du ciment, dans lequel la cuve (142) du moyen combiné de filtration et de drainage (14) est différente de la cuve (11) destinée à recevoir les eaux usées contenant du ciment (112) dans le premier exemple dans le présent document ;
- un moyen d'adsorption (15) comprenant une entrée (150) qui est raccordée à la sortie (144) de la cuve (142) du moyen combiné de filtration et de drainage (14) ; et
- un moyen (153) pour décharger les eaux usées traitées raccordé à une sortie du moyen d'adsorption (15),
dans lequel au moins deux parmi la cuve (11) destinée à recevoir les eaux usées contenant du ciment dans le premier exemple dans le présent document, le moyen de dosage (12, 13), le moyen combiné de filtration et de drainage (14) et le moyen d'absorption (15) sont agencés dans le châssis de poutres,
dans lequel la cuve (11) destinée à recevoir les eaux usées contenant du ciment dans le premier exemple dans le présent document est dotée d'un moyen d'agitation (113) configuré pour agiter les eaux usées contenant du ciment (112) et l'agent de traitement (120, 130) pour obtenir un mélange (124) des eaux usées contenant du ciment et de l'agent de traitement et pour conserver l'agent de traitement en solution et pour maintenir les contaminants présents dans les eaux usées en suspension et/ou les distribuer correctement à travers les eaux usées présentes dans la cuve (11) destinée à recevoir les eaux usées contenant du ciment dans le premier exemple dans le présent document,
dans lequel le moyen d'absorption (15) comprend une cuve (151) dans laquelle une quantité de charbon actif (152) est reçue, dans lequel la quantité de charbon actif (152) est agencée entre l'entrée (150) et la sortie du moyen d'adsorption (15), de telle sorte que les eaux usées contenant du ciment provenant de l'entrée (150) du moyen d'adsorption (15) sont acheminées à travers les pores de la quantité de charbon actif (152) en direction de la sortie du moyen d'adsorption (15) pour adsorber les contaminants présents dans les eaux usées, dans lequel la cuve (151) du moyen d'absorption (15) est différente de la cuve (142) du moyen combiné de filtration et de drainage (14) et de la cuve (11) destinée à recevoir des eaux les eaux usées contenant du ciment (112) dans le premier exemple dans le présent document.

2. Dispositif (10) selon la revendication 1, dans lequel une paroi du conteneur (100) comprend l'entrée (110) pour les eaux usées contenant du ciment (112) et/ou la sortie du moyen d'adsorption (15).

3. Dispositif (10) selon l'une quelconque des revendications précédentes, dans lequel la cuve (11) de réception des eaux usées contenant du ciment dans le premier exemple dans le présent document a un volume compris entre 2 et 50 m³.

4. Dispositif (10) selon une quelconque des revendications précédentes, dans lequel le moyen de dosage (12, 13) est configuré pour successivement doser un acide neutralisant (120) et un agent de floculation (130), suivi éventuellement par un agent de coagulation.

5. Dispositif (10) selon l'une quelconque des revendications précédentes, dans lequel le corps en géotextile (143) est configuré pour absorber au moins 75 % en poids du ciment présent dans les eaux usées en ce qu'il a des pores ayant la taille appropriée.

6. Bateau pour positionner une éolienne (51) en mer, dans lequel le bateau est doté d'un dispositif (10) selon l'une quelconque des revendications précédentes.

7. Procédé de traitement d'eaux usées contenant du ciment sur un bateau en utilisant un dispositif selon la revendication 1, comprenant les étapes consistant à
- fournir un dispositif (10) selon la revendication 1 sur le bateau ;
- introduire des eaux usées contenant du ciment (112) par l'intermédiaire de l'entrée de cuve (110) dans la cuve (11) destinée à recevoir les eaux usées contenant du ciment dans le premier exemple dans le présent document ;
- doser un agent de traitement (120, 130) dans la cuve (11) destinée à recevoir les eaux usées contenant du ciment dans le premier exemple dans le présent document avec le moyen de dosage (12, 13) de manière à ajouter l'agent de traitement (120, 130) aux eaux usées contenant du ciment dans la cuve (11) ;
- agiter les eaux usées contenant du ciment (112) et l'agent de traitement (120, 130) en utilisant le moyen d'agitation pour obtenir un mélange (124) des eaux usées contenant du ciment et de l'agent de traitement et pour conserver l'agent de traitement en solution et pour maintenir les contaminants présents dans les eaux usées en suspension et/ou les distribuer correctement à travers les eaux usées présentes dans la cuve (11) destinée à recevoir les eaux usées contenant du ciment dans le premier exemple dans le présent document ;
- filtrer et drainer les eaux usées traitées en utilisant le moyen combiné de filtration et de drainage (14) raccordé à la sortie (116) de la cuve (11) destinée à recevoir les eaux usées contenant du ciment dans le premier exemple dans le présent document, comprenant l'acheminement des eaux usées à travers le corps de cuve (143) composé de géotextile reçu dans la cuve du moyen de filtration et de drainage ;
- acheminer les eaux usées par l'intermédiaire de la sortie (144) du moyen combiné de filtration et de drainage (14) jusqu'au moyen d'adsorption (15) ;
- acheminer les eaux usées à travers le charbon actif (152) dans la cuve du moyen d'adsorption (15) ; et
- décharger les eaux usées traitées par l'intermédiaire du moyen d'adsorption (15) à l'aide du moyen (153) de décharge des eaux usées traitées.
